# EUROPÄISCHE PATENTSCHRIFT

(11) **EP 1 715 750 B1**
(45) Veröffentlichungstag und Bekanntmachung des Hinweises auf die Patenterteilung: **22.08.2007**
(21) Anmeldenummer: 06700077.8
(22) Anmeldetag: 04.01.2006
(51) Int. Cl.: A22C 25/14

(54) **VERFAHREN ZUM GESTEUERTEN MASCHINELLEN BEARBEITEN VON GEKÖPFTEM UND ENTWEIDETEM WEISSFISCH SOWIE VORRICHTUNG ZUM DURCHFÜHREN DES VERFAHRENS**
METHOD FOR THE CONTROLLED MECHANICAL TREATMENT OF HEADLESS AND GUTTED WHITEFISH, AND DEVICE FOR CARRYING OUT SAID METHOD
PROCEDE DE TRAITEMENT MECANIQUE COMMANDE DE POISSON MAIGRE ETETE ET EVIDE ET DISPOSITIF DESTINE A LA MISE EN OEUVRE DE CE PROCEDE

(30) Priorität: 18.02.2005 DE 102005009034
(43) Veröffentlichungstag der Anmeldung: 02.11.2006
(73) Patentinhaber: Nordischer Maschinenbau Rud. Baader GmbH + Co. KG, 23560 Lübeck (DE)
(72) Erfinder: PAULSOHN, Carsten, 23566 Lübeck (DE); SCHMÜSER, Dirk, 26311 Sereetz (DE)
(74) Vertreter: Wenzel & Kalkoff
(86) Internationale Anmeldenummer: PCT/EP2006/000111
(87) Internationale Veröffentlichungsnummer: WO 2006/087050

(56) Entgegenhaltungen:
- DE-B1- 2 832 259
- DE-B3- 10 341 941
- US-A- 4 446 601
- US-A- 5 026 318

## Beschreibung

Die Erfindung betrifft ein Verfahren zum gesteuerten Bearbeiten von geköpftem und entweidetem Weißfisch, insbesondere zum Herstellen von Salzfisch, umfassend folgende Verfahrensschritte: Vor dem Heraustrennen der im Bauchhöhlenbereich liegenden Hauptgräte mit diese bauchseitig überspannender Fischmembran werden Nackenblutreste, die distal an dem geköpften und entweideten Fisch links und rechts seitlich der Hauptgräte außerhalb der Fischmembran in Vertiefungen im Bereich des Kragenknochens freiliegen, mit wenigstens einem auf die Nackenblutreste ausgerichteten Reinigungs-Hochdruckflüssigkeitsstrahl entfernt; die Hauptgräte wird im Bereich der Bauchhöhle zusammen mit dort liegender Blutniere aus dem Fisch herausgeschnitten, um proximale Nackenblutreste am Fischfleisch im Bereich der Bauchhöhle zum Entfernen zugänglich zu machen; die proximalen Nackenblutreste werden mit fleischschonendem Reinigungsmittel entfernt. Die Erfindung bezieht sich auch auf eine zum Durchführen des Verfahrens geeignete Vorrichtung. Als zu bearbeitender Weißfisch seien zum Beispiel Dorsch, Seelachs, Brosme und Leng genannt. Es wird ein spezieller Fischrumpf erzeugt, der noch mit Hauptgräte im Schwanzbereich und mit Flankengräten versehen ist. Durch Einsalzen kann das Produkt auf Dauer haltbar gemacht werden. Es weist dann zum Beispiel eine Dicke in der Größenordnung von 1 cm auf. Zum Verzehr wird das Produkt gewässert, wodurch es auf die etwa fünffache Dicke aufquillt. Das Fischfleisch ist relativ fest und erhält durch Salzen und Wässern einen besonderen eigenen Geschmack.

Für das zu bearbeitende Fischprodukt ist es typisch, dass ein zum Kopfende liegender (distaler) Bereich des Nackenbluts in Vertiefungen im Bereich des Kragenknochens freiliegt, während ein zum Schwanzende liegender (proximaler) Bereich des Nackenbluts erst frei wird, wenn Fischmembran, Hauptgräte und Blutniere im Bereich der Bauchhöhle entfernt werden. Mit in der Patentschrift DE 103 41 941 beschriebenem bekanntem Verfahren und zugehöriger Maschine ist es gelungen, Nackenblut maschinell zu entfernen. Dabei ist es von besonderer Bedeutung, dass distale und proximale Nackenblutreste zum Entfernen differenziert erfasst werden. Die distalen Nackenblutreste lassen sich durch eine Wasser-Hochdruckbestrahlung, die mit großer Aufprallwirkung erzeugt wird, beseitigen. Dabei bleibt das Fischfleisch durch die geschlossene Fischmembran geschützt und unbeschädigt. Nach Entfernen der Hauptgräte im Bereich der Bauchhöhle bestehen besondere Anforderungen zum Abnehmen der proximalen Nackenblutreste. Die Gefahr von Kontamination, indem Bakterien weitflächig über das Fleisch verteilt werden, muss ausgeschlossen werden. Die Nackenblutreste müssen vollständig entfernt werden, und das Fischfleisch darf nicht beschädigt werden. Zumeist sind die zunächst verdeckten proximalen Nackenblutreste relativ gering, so dass man nach dem Herausschneiden der Gräte mit einer in DE 103 41 941 beschriebenen sanften Bürstenreinigung gute Ergebnisse erzielt. Infolge von Abweichungen in der Anatomie des Naturprodukts kommt es jedoch vor, dass proximale Nackenblutreste größer ausfallen und die maschinelle Nackenblutentfemung nicht ausreichend ist. Bereich und Menge der proximalen Nackenblutreste werden auch durch die Schnitte zum Heraustrennen der Hauptgräte im Bereich der Bauchhöhle beeinflusst. Knapp an der Gräte vorbeigeführte Schnitte zur optimalen Gewinnung von Fischfleisch vergrößern den Bereich der proximalen Nackenblutreste. Zudem unterliegen die Schnitte auch anatomischen Abweichungen. Weiterhin führen unterschiedliche Fischlängen zu nicht vorherbestimmbaren Änderungen in Ausdehnung und Menge von Nackenblutresten. Nach alledem ist es erforderlich geworden, Sichtkontrollen durchzuführen, um nicht ausreichend gereinigte Produkte auszuscheiden. Dies behindert die Produktion und führt zu erheblichen, insbesondere durch Personaleinsatz bedingten Mehrkosten.

Der Erfindung liegt die Aufgabe zugrunde, zur maschinellen Bearbeitung von Weißfisch die Entfernung von Nackenblutresten zu verbessern. Insbesondere in ihrer Größe und Lage mit erheblichen Schwankungen auftretende proximale Nackenblutreste sollen maschinell zuverlässig entfernt werden, um den Produktfluss zu erhöhen und Personal zur Nachkontrolle einzusparen. Es soll möglich werden, mit dicht an der Hauptgräte vorbeigeführten Schnitten die Fleischausbeute zu erhöhen. Die Qualität des Produkts soll durch besonders fleischschonende Reinigung gewährleistet bleiben. Es soll auch möglich werden, ein und dieselbe Maschine in automatischer Steuerung für Weißfische mit großen Längenunterschieden, insbesondere im Größenbereich von ca. 300 bis 800 mm zu betreiben.

Die Aufgabe wird bei dem eingangs genannten Verfahren dadurch gelöst, dass zum fleischschonenden Entfernen die proximalen Nackenblutreste des im Bereich der Bauchhöhle von Hauptgräte und wenigstens einem Teil der Fischmembran befreiten Fisches schichtweise abgetragen werden, wobei ein oberer (erster) Anteil durch wenigstens eine auf die proximalen Nackenblutreste ausgerichtete Reinigungs-Hochdruckflüssigkeitsbestrahlung entfernt wird, die derart eingestellt wird, dass offenliegendes Fischfleisch unbeschädigt bleibt und nur ein Restanteil des proximalen Nackenbluts zurückbleibt, der unter der Flüssigkeitsbestrahlung zum Schutz des Fischfleisches beiträgt und anschließend mit wenigstens einem weiteren fleischschonenden Mittel abgetragen wird. Eine zum Durchführen des Verfahrens geeignete Vorrichtung umfasst eine eine Förderstrecke bestimmende Fördereinrichtung zum Fördern des zu bearbeitenden Fisches in Mehrzahl, eine an der Förderstrecke angeordnete Entgrätungseinrichtung zum Heraustrennen der Hauptgräte im Bereich der Bauchhöhle, eine an der Förderstrecke in Fischlaufrichtung vor der Entgrätungseinrichtung angeordnete Hochdruckflüssigkeitsstrahl-Reinigungseinrichtung zum Entfernen von distalen, außerhalb der Fischmembran freiliegenden Nackenblutresten und eine an der Förderstrecke in Fischlaufrichtung nach der Entgrätungseinrichtung angeordnete Reinigungseinrichtung zum fleischschonenden Entfernen von proximalen Nackenblutresten nach dem Herausschneiden der Hauptgräte im Bereich der Bauchhöhle. Erfindungsgemäß wird die nach der Entgrätungseinrichtung angeordnete Reinigungseinrichtung durch eine Einrichtung zum schichtweise Abtragen der proximalen Nackenblutreste derart ausgebildet, dass sie eine Hochdruckflüssigkeitsstrahl-Einrichtung zum einen Restanteil belassenden fleischschonenden Abtragen der proximalen Nackenblutreste sowie eine in Fischlaufrichtung nachgeordnete Reinigungseinrichtung zum fleischschonenden Abtragen des nach Hochdruckflüssigkeitsbestrahlung zurückbleibenden Restanteils aufweist.

Durch das erfindungsgemäße schichtweise Abtragen der proximalen Nackenblutreste gelingt es, proximale Nackenblutreste mit erheblichen Schwankungen in Größe, örtlicher Ausdehnung und/oder Lage vollständig zu entfernen, und zwar unter Gewährleistung besonders fleischschonender Reinigung. Erfindungsgemäß kommt es darauf an, auch proximale Nackenblutreste mit einer unter relativ hohem Druck erzeugten Bestrahlung lokal an singulären Stellen zu entfernen, wobei die dynamische Druck-Aufprallwirkung aber dermaßen reduziert wird, dass die lokale Bestrahlung nicht in das Fischfleisch einschneidet, sondern statt dessen gezielt einen Restanteil oder Restschichten der proximalen Nackenblutreste belässt. Dadurch fallen für die anschließende Entfernung mit weiterem fleischschonendem Reinigungsmittel reduzierte definierte proximale Nackenblutreste an. Diese sind durch die Hochdruckflüssigkeitsbestrahlung auf ein Maß in der gleichen Größenordnung abgetragen worden. Dieser lokale Restanteil bzw. diesen bestimmende Restschichten lassen sich dann zuverlässig mit dem weiteren fleischschonenden Mittel abnehmen. Wesentlich ist, dass die vorgeordnete fleischschonende Hochdruckflüssigkeitsbestrahlung je nach unregelmäßigem Auftreten sowohl kleinere als auch größere Mengen der proximalen Nackenblutreste abträgt, so dass dann noch zu entfernende Restanteile in definiert reduzierter Menge in im wesentlichen ähnlicher Ausprägung und Erscheinung übrig bleiben. Selbst wenn die Fischqualität erheblich schwankt und/oder die Menge der jeweils herausgeschnittenen Hauptgräte der Bauchhöhle sehr unterschiedlich ist, erreicht man das vollständige Entfernen des Nackenbluts. Dadurch wird die Produktion ergiebiger, und es lassen sich laufende Sichtkontrolle vermeiden und damit Personal einsparen.

Im Sinne und nach Maßgabe der Erfindung ist unter einem Reinigungs-Hochdruckflüssigkeitsstrahl für die distalen Nackenblutreste ein solcher Druckstrahl bzw. eine solche Druckbestrahlung zu verstehen, die beim Entfernen von Blutresten an offenem, nicht durch die Fischmembran geschütztem Fleisch zur Verletzung desselben führen würden. Die distale Bestrahlung einer singulären lokalen Blutreststelle wird zum Beispiel und zweckmäßig mit einer Flachstrahl-Düse eines Abstrahlwinkels von ca. 20° und einer flachen Dicke (Flachheit) von ca. 3 bis 4 mm erzeugt. Andererseits ist im Sinne und nach Maßgabe der Erfindung unter einem Reinigungs-Hochdruck-Flüssigkeitsstrahl für die proximalen Nackenblutreste ein solcher Druckstrahl bzw. eine solche Druckbestrahlung zu verstehen, die so eingerichtet werden, dass die an offenliegendem, ungeschütztem Fleisch auftretenden Blutreste bis auf den gezielt belassenen Restanteil ohne Verletzung des Fischfleisches abgenommen werden. Diese proximale Bestrahlung einer singulären lokalen Blutreststelle wird zum Beispiel und zweckmäßig mit einer Flachstrahl-Düse eines Abstrahlwinkels von ca. 65° und einer flachen Dicke (Flachheit) von ca. 2 bis 3 mm erzeugt. Um die erfindungsgemäßen Hochdruckflüssigkeitsstrahlen für distale bzw. proximale Nackenblutreste zu erzeugen, können die Düsen zum Beispiel auch an Niederdruck-Flüssigkeitsquellen über geeignete Leitungen angeschlossen werden. Es kommt im Ergebnis darauf an, dass an und vor den Düsenabstrahlöffnungen die bezeichnete Druck- und Strahlcharakteristik mit der zugehörigen Wirkung erzielt wird.

Wie an sich aus DE 103 41 941 bekannt, ist es besonders vorteilhaft, ein fleischschonendes mechanisches Reinigungsmittel, zweckmäßig ein gesteuertes Bürstenmittel zu verwenden, um Restmengen der proximalen Nackenblutreste zu entfernen. Ein gesteuertes Bürstenmittel ist für die Zwecke der Erfindung besonders geeignet, da für diese Reinigung die proximalen Nackenblutreste auf das weitgehend gleiche geringe Maß reduziert worden sind, so dass die Bürstenreinigung sanft, zeitlich kurz sowie in definiert eingegrenztem lokalen Bereich betrieben werden kann. Die Intensität der Bürstenreinigung kann sehr weitgehend reduziert werden, da nur noch proximale Nackenblutreste geringerer und im wesentlichen gleicher Menge zu entfernen sind. Infolge der geringen Intensität der Bürstenreinigung können von dieser auch die Stellen erfasst werden, an denen zuvor proximale Nackenblutreste mit Hochdruckflüssigkeitsbestrahlung abgenommen worden sind. Da die Hochdruckflüssigkeitsbestrahlung für die proximalen Nackenblutreste fleischschonend durchgeführt wird, kann diese vorteilhaft auch auf die Stellen angewandt werden, an denen zuvor distale Nackenblutreste mit intensiver, von dem Fleischbereich durch die Fischmembran ferngehaltener Hochdruckflüssigkeitsbestrahlung abgenommen worden sind.

In bevorzugter Ausführung der Erfindung kann die Hochdruckbestrahlung der distalen Nackenblutreste und die Hochdruckbestrahlung der proximalen Nackenblutreste mit zumindest im Wesentlichen gleichem Quellendruck erzeugt werden, wobei die Aufprallwirkung der proximalen Hochdruckbestrahlung kleiner als die Aufprallwirkung der distalen Hochdruckbestrahlung gemacht wird. Zweckmäßig wird die proximale Bestrahlung durch geeignete Flachstrahl-Düsen aufgefächert, die jeweils unter einem Abstrahlwinkel von ca. 50° bis 70° eine Strahlfachheit von unter ca. 3 mm aufweisen. Hingegen wird für distale Bestrahlungsstellen jeweils ein konzentrierter, relativ scharfer Strahl eines engen Strahl-Flachkegels erzeugt, der zweckmäßig einen Abstrahlwinkel von ca. 10° bis 30° und eine Strahlflachheit von mehr als 3 mm aufweist.

Wenngleich es nach der Erfindung grundsätzlich in Betracht kommt, aufeinanderfolgende Bestrahlungen jeweils für die distalen und proximalen Nackenblutreste durch zwei oder sogar mehr Stationen zu erzeugen, so wird in bevorzugter Ausführung für die distale und die proximale Bestrahlung jeweils nur eine Station vorgesehen, die zweckmäßig ein Paar von symmetrisch zur vertikalen Fischförderebene angeordneten Düsen aufweist. Um mit großen Fischlängen verbundene ausgedehnte proximale Nackenblutreste zu erfassen, können zweckmäßig aber auch relativ zur vertikalen Förderebene äußere Düsen mit einem Flachstrahl-Winkel von z.B. 45° und entsprechend innere Düsen mit einem Flachstrahl-Winkel von z.B. 20° vorgesehen werden, die in Förderrichtung auch in geringem Abstand aufeinanderfolgen können und dann zwei Stationen bilden. In bevorzugter erfindungsgemäßer Ausführung wird auch das weitere fleischschonende Abtragungsmittel mit nur einer Reinigungsstation ausgebildet. Denkbar ist es aber auch, dass zweckmäßig Bürsten-Reinigungsmittel in z.B. zwei Stationen aufeinanderfolgen.

Zur optimierten Fleischgewinnung können die Schnitte zum Heraustrennen der Hauptgräte im Bauchhöhlenbereich dicht an der Hauptgräte vorbeigeführt werden, wobei der mittlere Teil der Fischmembran weggeschnitten wird und seitliche Längsränder als Reste der Membran zurückbleiben. Für diese Schnitte wird die Hochdruck-Flüssigkeitsbestrahlung zum Abtragen des oberen Anteils der proximalen Nackenblutreste so eingestellt, dass die Membranränder zum Aufweiten der Bauseite des Fisches zur Seite gedrückt und durch die Bestrahlung leicht ablösbar gemacht werden, und anschließend entfernt ein gesteuertes Bürstenmittel die Membranränder, um den dadurch für das Bürstenmittel offen zu liegen kommenden Restanteil der Nackenblutreste zu entfernen.

Zweckmäßig kann die den oberen Anteil der proximalen Nackenblutreste abtragende Hochdruck-Flüssigkeitsbestrahlung auch die zuvor mit Hochdruck-Flüssigkeitsbestrahlung beaufschlagten Stellen der distalen Nackenblutreste erfassen.

Um den Verfahrensablauf in einer Vorrichtung besonders günstig zu gestalten, wird zweckmäßig in üblicher Weise der zu bearbeitende Fisch im Schwanzbereich seitlich der Hauptgräte von unten bis über die Hauptgräte aufgeschnitten, bevor mittels Hochdruck-Flüssigkeitsbestrahlung außerhalb der geschlossenen Membran freiliegende distale Nackenblutreste entfernt werden. Vorteilhaft wird dabei, wie dies an sich bekannt ist, der Vorgang des Aufschneidens des Fisches im Schwanzbereich seitlich der Hauptgräte genutzt, um in Abhängigkeit von dem jeweils zu bearbeitenden Fisch einen Fischgrößenwert zum gesteuerten Betrieb sämtlicher Reinigungsschritte zu gewinnen. In der Vorrichtung wird der Schneideinrichtung eine Messeinrichtung mit zugeordnetem Förderweg zum Erfassen von Fischlängendaten vorgeordnet, die zur programmierten Verknüpfung mit Fischdaten für die Betriebssteuerung der Nackenblutreste entfernenden Reinigungseinrichtungen bestimmt sind.

Unteransprüche sind auf die genannten und noch andere zweckmäßige und vorteilhafte Ausgestaltung der Erfindung gerichtet. Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben. Es zeigen:
- Fig. 1: in Längsseitenansicht eine erfindungsgemäße Vorrichtung mit Reinigungsstationen,
- Fig. 2: in detaillierter Seitenansicht der Vorrichtung gemäß Fig. 1 dem Schwanzbereich des Fisches zugeordnete Schneideinrichtung und dieser nachgeordnete Reinigungseinrichtung für distale Nackenblutreste,
- Fig. 3A und 3B: einen geköpften und entweideten Weißfisch vor der Bearbeitung in Unteransicht und Schnittansicht,
- Fig. 4A Fig. 4B: in Unteransicht und Schnittansicht den Fisch gemäß Fig. 3 nach Aufschneiden im Schwanzbereich und mit geschlossener Membran in Position zur Entfernung von freiliegenden distalen Nackenblutresten,
- Fig. 6: in Unteransicht den Fisch gemäß Fig. 4 nach dem Entgräten im Bereich seiner Bauchhöhle,
- Fig. 7A und 7B: in Längs- und Queransicht den Fisch gemäß Fig. 6 nach dem Entgräten in Position für eine Bürstenreinigung,
- Fig. 8: im Querschnitt eine erste Hochdruckflüssigkeitsstrahl-Reinigungseinrichtung für proximale Nackenblutreste und
- Fig. 9: in Unteransicht den im Bauchhöhlenbereich entgräteten, von Nackenblutresten befreiten Fisch.

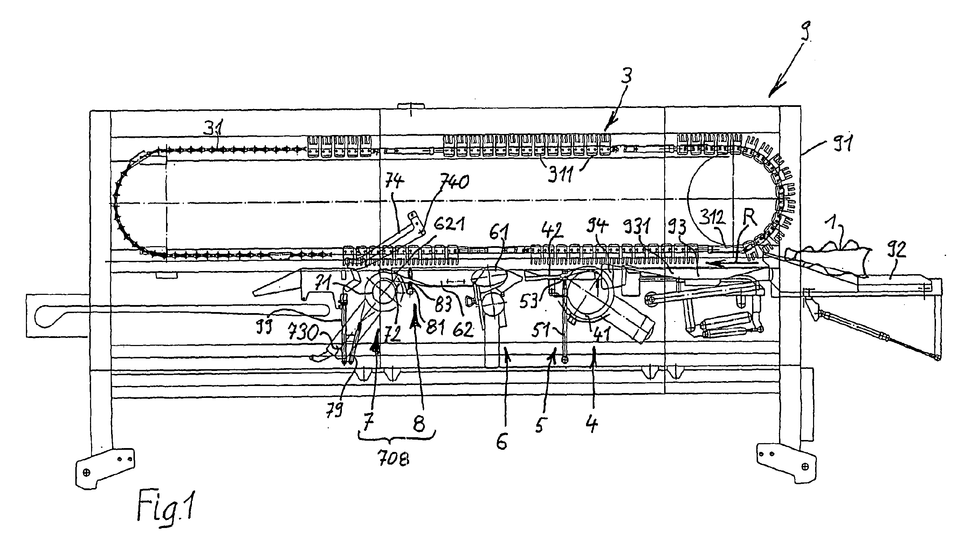

Eine zum Durchführen des erfindungsgemäßen Verfahrens vorgesehene erfindungsgemäße Vorrichtung 9, wie sie aus Fig. 1 ersichtlich ist, umfasst in an sich bekannter Weise ein Gestell 91 mit einer Schneideinrichtung 4 und dieser nachgeordneter Entgrätungseinrichtung 6. Ein Tisch 92 ist vorgesehen, über den die Vorrichtung 9 in Aufeinanderfolge mit zu bearbeitenden Weißfischen 1 beschickt wird. Eine Fördereinrichtung 3 umfasst in Reihenanordnung Gruppen von endlos umlaufend geführten und mittels Förderkette 31 getriebenen Mitnehmerelementen 311 zum Transport der Fische 1 in Fischlaufrichtung R längs der Förderstrecke der Vorrichtung 9. Jeder Fisch 1 wird mittels Schwanzklammer 312 erfasst und mit seinem Schwanz voraus gefördert.

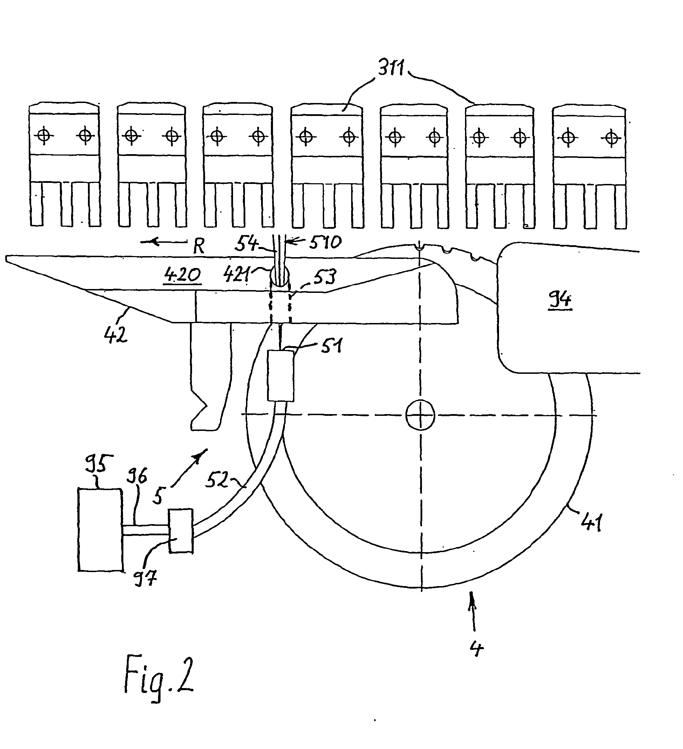

Längs der Förderstrecke ist zwischen der Schneideinrichtung 4 und der Entgrätungseinrichtung 6 eine Hochdruckflüssigkeitsstrahl-Reinigungseinrichtung 5 zum Entfernen von distalen Nackenblutresten 21 angeordnet. In Fischlaufrichtung R hinter der Entgrätungseinrichtung 6 ist eine erfindungsgemäße Reinigungseinrichtung 708 zum fleischschonenden Entfernen von proximalen Nackenblutresten 22 nach dem Herausschneiden der Hauptgräte 111 im Bereich der Bauchhöhle 14 vorgesehen. Dieser ist eine Spüleinrichtung 99 nachgeordnet. Wie aus Fig. 1 und 2 ersichtlich, sind am Eingang der Schneideinrichtung 4 übliche Leitkörper 93, 94 angeordnet, über die der Fisch 1 an ein Schnitt-Kreismesser 41 der Schneideinrichtung 4 gebracht wird.

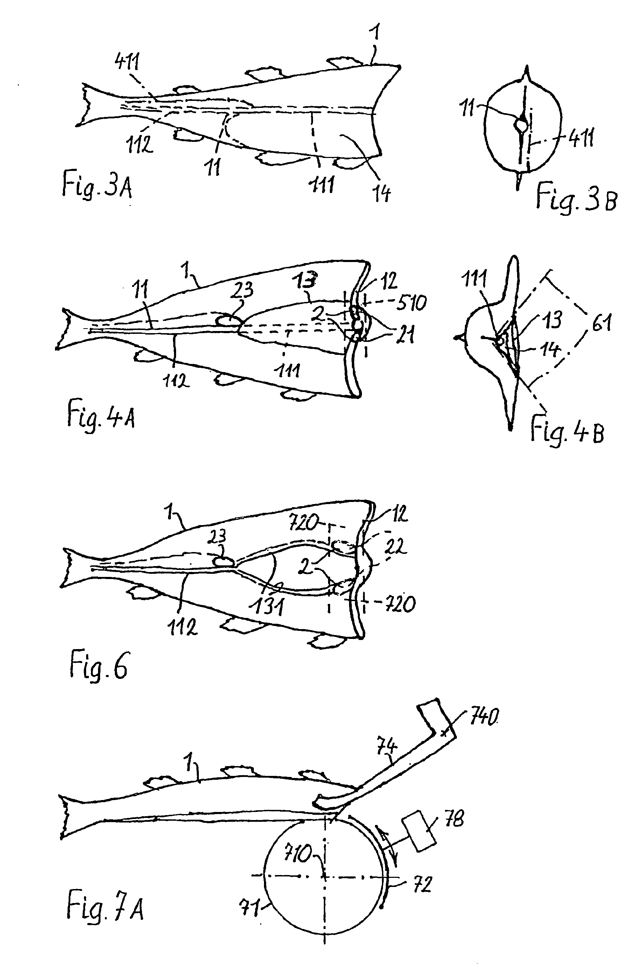

Bei jedem zu bearbeitenden Weißfisch 1 handelt es sich um einen von Kopf und Eingeweide befreiten, noch mit Hauptgräte 11 versehenen Fischrumpf. Dieser wird in Fig. 3A und 3B dargestellt. Wie zum Herstellen von Saltzfisch aus Weißfisch üblich, wird der Fisch 1 im Schwanzbereich seitlich der Hauptgräte 11 von unten bis über die Hauptgräte 11 mittels der Schneideinrichtung.4 und dementsprechend vertikal ausgerichtetem Messer 41 aufgeschnitten. Die Schnittlinie 411 ist strichpunktiert aus Fig. 3A und 3B ersichtlich. Es entsteht das in Fig. 4A und 4B dargestellte, über einen Leitkörper der Schneideinrichtung 4 geführte Produkt. Dieses ist mit zum Kopfende des Fisches 1 freiliegenden distalen Blutresten 21 behaftet, die links und rechts seitlich der Hauptgräte 111 außerhalb der Fischmembran 13 in Vertiefungen im Bereich des Kragenknochens 12 nach unten freiliegen. Die distalen Blutstellen 2 entstehen beim Durchtrennen seitlicher Blutnieren am Kopf des Fisches, wenn der Kopf mit einem Schrägschnitt von ca. 45° abgetrennt wird.

Die zur Bauchseite des Fisches 1 freiliegenden distalen Nackenblutreste 21 werden vor dem Heraustrennen der im Bereich der Bauchhöhle 14 liegenden Hauptgräte 111 mit auf sie ausgerichteten Hochdruck-Wasserstrahlen 54 entfernt (Fig. 2). Wie aus Fig. 4A und 4B ersichtlich, erfassen die Hochdruck-Wasserstrahlen 54 einen die kopfseitigen Nackenblutreste 21 einschließenden lokalen Arbeitsbereich 510 mit singulären Stellen 2. Da die Hauptgräte 111 des Bauchhöhlenbereichs noch nicht herausgetrennt worden ist, bleibt das Fischfleisch durch eine die Hauptgräte 111 bauchseitig überspannende Fischmembran 13 vor der Hochdruck-Wasserbestrahlung 84 geschützt. Dies erlaubt es, dass Düsen 51 der Hochdruckflüssigkeitsstrahl-Einrichtung 5 zum Entfernen der distalen Nackenblutreste 21 auf diese mit steilem Winkel zur Oberfläche der Nackenblutreste 21, insbesondere im Bereich von 90° ausgerichtet werden. Von den Düsen 51 werden Strahlen mit relativ großer dynamischer Aufprallwirkung abgegeben. Zum Beispiel haben sich Flachstrahldüsen mit einem Abstrahlwinkel von 20° und einer Strahlflachheit von 3 bis 4 mm als besonders geeignet erwiesen.

Aus Fig. 2 sind wesentliche Teile der Wasserstrahl-Reinigungseinrichtung 5 für distale Nackenblutreste im Detail ersichtlich. Der Überleitkörper 42 weist einen firstdachförmigen Profilquerschnitt auf. In jeder seitlichen Firstfläche 420 befindet sich eine Öffnung 421, aus der Wasser mit der genannten Strahlcharakteristik nach oben in den Arbeitsbereich 510 abstrahlt. Die Öffnungen 421 sind durch ein Paar vertikal gerichteter Durchgangslöcher 53 in dem Leitkörper 42 gebildet. Unterhalb des Körpers 42 sind im Paar die Hochdruck-Wasserstrahldüsen 51 angeordnet, die jeweils über einen Schlauch 52 mit von einer Druckwasserquelle 95 abgegebenem, unter Druck stehendem Wasser beaufschlagt werden und jeweils auf das zugehörige Durchgangsloch 53 ausgerichtet sind.

Wie aus Fig. 2 ersichtlich, liegen die beiden an den Firstflächen 420 erzeugten Hochdruck-Wasserstrahlen 54 noch im Bereich des Schnittmessers 4, so dass die Reinigung zeitlich und räumlich kurz und unmittelbar im Anschluss an den Schnitt in der Schneideinrichtung 4 erfolgt.

Wie in Fischbearbeitungsvorrichtungen und -maschinen üblich, werden die auf jeden Fisch wirkenden Aggregate in Abhängigkeit von der Länge des jeweils in die Vorrichtung eingeförderten Fisches 1 gesteuert. Zu diesem Zweck wird die Länge jedes Fisches 1 gemessen. Zweckmäßig erfolgt die Längenmessung in an sich bekannter Weise im Bereich vor der Schneideinrichtung 4. Der zum Schnitt des Fisches 1 herangezogene Längenwert wird zur Steuerung der Wasserstrahldüsen 51 genutzt. Insbesondere werden die Wasserstrahlen 54 über Magnetventile 97 mittels eines üblichen, nicht dargestellten Rechners fischlängenabhängig in Verknüpfung mit spezifischen gespeicherten Fischartdaten gesteuert. Die Wasserstrahlen werden beim Passieren der Stellen 2 der distalen Blutreste 21 zeitlich relativ kurz, in lokalem Bereich und mit hoher Aufprall-Intensität hervorgebracht.

Die im Bereich der Bauchhöhle 14 liegende Hauptgräte 111 wird mittels der Entgrätungseinrichtung 6 erst nach dem Abtrennen der distalen Nackenblutreste 21 in der Reinigungseinrichtung 5 mittig im Bereich der Flankengräten herausgetrennt. Die Entgrätungseinrichtung 6 umfasst in üblicher Anordnung und Ausbildung ein Paar Kreismesser 61, die in Fig. 4B mit strichpunktierter Linie angedeutet werden. Sie sind entsprechend den Flankengräten der Bauchhöhle 14 im Winkel zueinander ausgerichtet. Während der Teil 112 der Hauptgräte 11 im Schwanzbereich des Fisches 1 bleibt, wird der Teil 111 der Hauptgräte 11 im Bereich der Bauchhöhle 14 zusammen mit dem mittleren Teil der Membran 13 und der dem Hauptgrätenteil 111 liegenden Blutniere aus dem Fisch 1 herausgeschnitten. Dadurch werden die aus Fig. 6 ersichtlichen, an den Stellen 2 zum Schwanzende des Fisches 1 hin liegende proximale Nackenblutreste 22 an der Bauchseite des Fisches 1 zugänglich gemacht. Die Fischmembran 13 besteht aus einer oberen und unteren Membran mit dazwischenliegender Schwimmblase.

Um die Fleischausbeute zu optimieren, werden die Schnitte zum Heraustrennen des Hauptgrätenteils 111 dicht an dieser vorbeigeführt, wobei der mittlere Teil der Fischmembran 13 weggeschnitten wird und seitliche Längsränder oder -reste 131 der unteren Membran zurückbleiben. Zwar liegen dann die proximalen Nackenblutreste 22 noch unter den stehengebliebenen, seitlichen Membranresten oder -rändern 131. Die proximalen Nackenblutreste 22 werden erfindungsgemäß dennoch von einer nachfolgend näher beschriebenen Reinigungs-Hochdruckflüssigkeitsbestrahlung 84 erfasst. Zum exakten Heraustrennen des Hauptgrätenteils 111 kommt es darauf an, dass die Membran erst beim Heraustrennen des Hauptgrätenteils geöffnet wird.

Die proximalen Nackenblutreste 22 werden erfindungsgemäß in zwei Schritten fleischschonend entfernt, indem sie sukzessive schichtweise abgetragen werden. Zwar sind die proximalen Nackenblutreste 22 zumeist deutlich kleiner als die distalen Nackenblutreste 21; sie unterliegen aber in Abhängigkeit von der Fischqualität, der Fischlänge sowie der Menge des herausgeschnittenen Hauptgrätenteils 111 besonderen Schwankungen. Nach einem wesentlichen Gedanken der Erfindung soll eine an sich bekannte sanfte Bürstenreinigung zum Entfernen der proximalen Nackenblutreste 22 nutzbar gemacht werden. Zu diesem Zweck ist in Fischlaufrichtung R nach der Entgrätungseinrichtung 6 die Reinigungseinrichtung 708 angeordnet, die das schichtweise Abtragen der proximalen Nackenblutreste 22 verwirklicht. Die Reinigungseinrichtung 708 weist eine Hochdruckflüssigkeitsstrahl-Einrichtung 8 zum einen Restanteil belassenden fleischschonenden Abtragen der proximalen Nackenblutreste 22 sowie eine in Fischlaufrichtung R nachgeordnete Reinigungseinrichtung 7 zum fleischschonenden Abtragen des nach Hochdruckflüssigkeitsbestrahlung 84 zurückbleibenden Restanteils in Abstimmung mit der und in Anpassung auf die vorausgehende Abtragung auf.

Zunächst kommt es erfindungsgemäß darauf an, dass ein oberer oder erster Anteil der proximalen Nackenblutreste 22 zur Vergleichmäßigung abgetragen wird. Die Hochdruckflüssigkeitsbestrahlung 84 wird derart eingestellt, dass offen liegendes Fischfleisch unbeschädigt bleibt und gezielt ein Restanteil mit Restschichten belassen wird, der bei der Hochdruckbestrahlung zur Schonung des Fischfleisches beiträgt. Der Restanteil entsteht also dadurch, dass die proximalen Nackenblutreste 22 durch die Hochdruckflüssigkeitsbestrahlung 84 auf ein Maß in der gleichen Größenordnung abgetragen werden. Der verbleibende Restanteil, der zum Beispiel etwa 50 % der anfänglich zu beseitigenden proximalen Nackenblutreste 22 beträgt, lässt sich dann mit besonders fleischschonendem Bürstenmittel 71 der Reinigungseinrichtung 7 abnehmen.

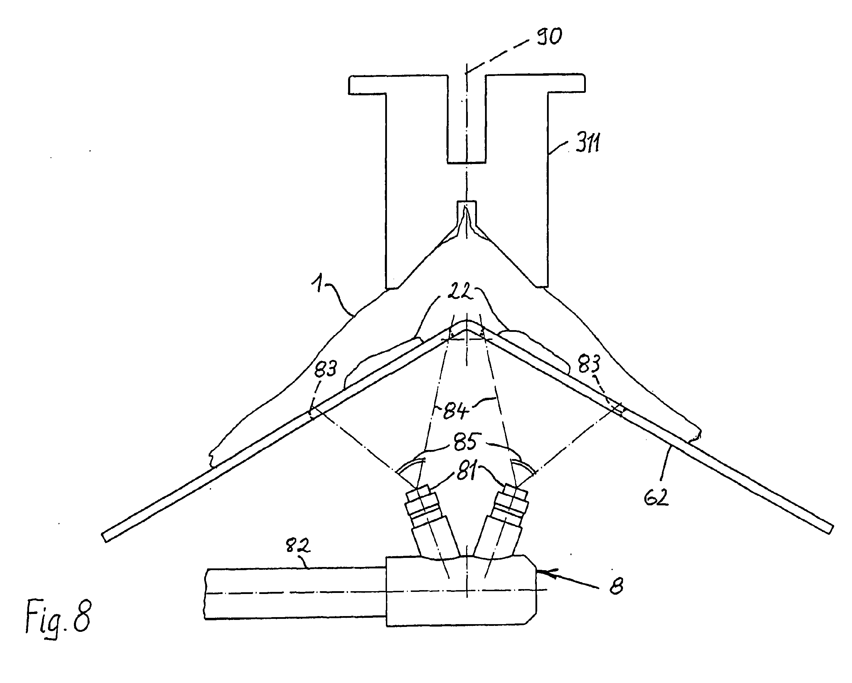

Wie aus Fig. 1 und 8 ersichtlich, wird ein Paar Hochdruck-Düsen 81 der Einrichtung 8 unterhalb von Durchgangsöffnungen 83 einer den Fisch 1 bauchseitig führenden Überleitungseinrichtung angeordnet. Die Überleitungseinrichtung weist einen dachfirstförmigen Leitkörper 62 auf, der den Fisch 1 aus der Entgrätungseinrichtung 6 übernimmt, an seiner Bauchseite über die Durchgänge 83 hinwegführt und ihn über Bürstenfenster 621 in dem Leitkörper 62 der Bürstenreinigung zuführt. Dabei wird der Fisch 1 mit dem Schwanzende zuerst durch die Stationen gezogen.

Wie man aus Fig. 8 erkennt, ist jede Düse 81 direkt auf einen Nackenblutrest 22 ausgerichtet. Einerseits kommt es darauf an, dass der abgegebene Strahl einen ausreichend hohen Druck aufweist, und andererseits wird der Strahl zu einem die abzutragende Blutstelle einschließenden Flachkegel aufgefächert, um dadurch das Fischfleisch zu schonen und die damit verbundene ausreichend begrenzte Abtragung herbeizuführen. Infolge des hohen Druckes wird erreicht, dass der obere Anteil der proximalen Nackenblutreste 22 in kurzer Zeit abgetragen wird, so dass dadurch eine Schonung unter Vermeidung zu langer Bestrahlung erfolgt und die Durchsatzgeschwindigkeit groß gemacht werden kann. Jeder Strahl wird zum Beispiel zweckmäßig als Flachstrahl 84 mit einem Abstrahlwinkel 85 von 65° und einer (senkrecht zur Blattebene gerichteten) Flachheit von ca. 2 bis 3 mm erzeugt. Eine solche Charakteristik hat sich im Ausführungsbeispiel als besonders geeignet erwiesen.

Mit einer weiteren Funktion der Flachdüsen 81 erreicht man, dass die Flachstrahlen 84 die noch links und rechts neben der (herausgetrennten) Hauptgräte 111 stehengebliebenen seitlichen Reste 131 der unteren Membran, die in Fig. 8 nicht dargestellt sind, zur Seite drücken, so dass die Bestrahlung 84 ungehindert auf die proximalen Nackenblutreste 22 mit reduzierter Aufprallwirkung auftrifft. Dadurch werden die Membranränder-/reste unterspült und aufgeweicht und für eine leichte mechanische Ablösung mit dem nachfolgenden Bürstenmittel 7 vorbereitet. Weiterhin wird der Strahlbereich der Düsen 81 derart aufgeweitet und ausgerichtet, dass er auch die Stellen der durch die Bestrahlung 54 entfernten distalen Nackenblutreste 21 erfasst. Dadurch wird die Reinigung vervollkommnet.

Wie bei der Reinigungseinrichtung 5 erfolgt auch die Wasserstrahlsteuerung der Einrichtung 8 zweckmäßig mittels Magnetventil 97 in Abhängigkeit von dem Auftreten und Passieren der proximalen Nackenblutreste 22. Zu diesem Zweck sind Ventile 97 der Wasserstrahlsteuerung mit dem üblichen Betriebs-Steuerungsrechner einer Fischbearbeitungsmaschine verbunden, um in programmierter Verknüpfung gemessene Fischlängendaten und gespeicherte artspezifische Fischdaten zum Erzeugen von Steuerungssignalen zum Betrieb der Maschinenaggregate zu nutzen.

Eine Leitungen 52 der Hochdruckflüssigkeitsstrahl-Reinigungseinrichtung 5 speisende Druckquelle 95, die in die Vorrichtung 9 integriert ist, wird zweckmäßig auch zur Speisung einer Leitung 82 der Hochdruckflüssigkeitsstrahl-Reinigungseinrichtung 8 geschaltet. Die unterschiedlichen von den Düsen 51 und 81 hervorgebrachten Aufprallwirkungen werden jeweils durch Strahlwinkel, -ausrichtung und -flachheit bestimmt. Insoweit kommt es auf die Düsencharakteristik mit ihren Wirkungen und nicht auf die Druckquelle 95 als solche an, die zweckmäßig ein Niederdruckaggregat sein kann.

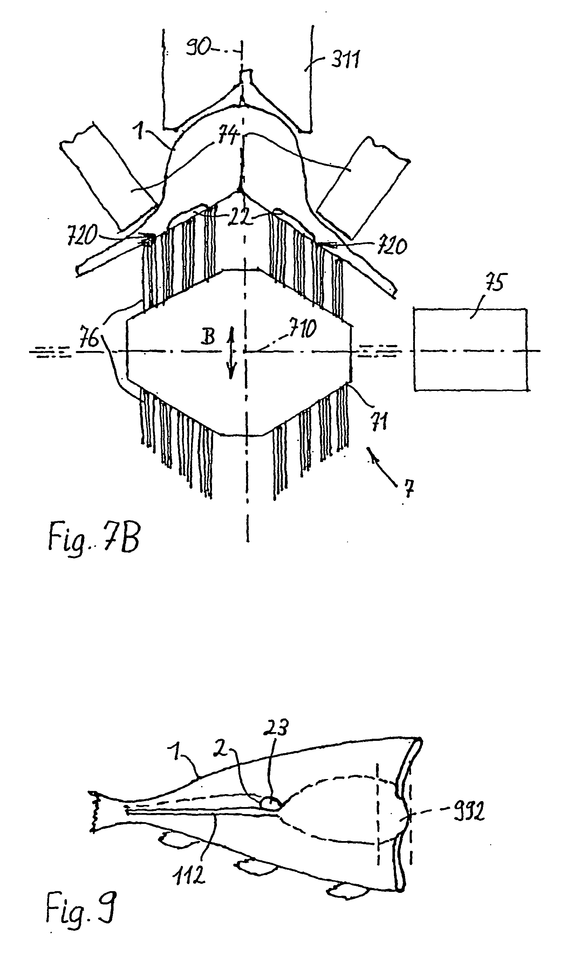

Die Bürsten-Reinigungseinrichtung 7 der Zweischritt-Reinigungseinrichtung 708 geht mit ihren wesentlichen Elementen aus Figuren 7A und 7B hervor. Die Einrichtung 7 umfasst eine im Längsquerschnitt doppel-kegelförmige Walzenbürste 71, die um eine Achse 710 in Verbindung mit einem Drehantrieb 75 drehbar gelagert ist. Die Achse 710 ist senkrecht zu einer gedachten Symmetrie-Förderebene 90 gerichtet, in der die Mitnehmer 311 der Fördereinrichtung 3 umlaufen. Borsten 76 enden entsprechend der stumpfwinkligen Form und Führung des Fisches 1 an seiner Unterseite mit kegelförmig schräger Bürsten-Abnehmerfläche, so dass sie in angepasster Form im Arbeitsbereich 720 schonend in Bürsteneingriff mit den an den Stellen 2 liegenden proximalen Restanteilen der Nackenblutreste 22 gelangen, wenn der Fisch 1 die Bürste 71 zur Reinigung in umittelbarem zeitlichem und örtlichem Anschluss an die Hochdruckstrahlreinigung passiert. Die Bürstenreinigung erfasst gezielt auch die Stellen, die mit den Hochdruck-Flachstrahlen 54, 84 der Einrichtungen 5 und 8 beaufschlagt worden sind. Dadurch wird das vollständige Entfernen der Nackenblutreste in besonderem Maße gewährleistet.

Die Einrichtung 7 umfasst eine ein gesteuertes Eingriffsmittel bildende, aus Fig. 7A ersichtliche Bürstenabdeckung 72, die ein der Bürsten-Kegelform entsprechendes Mantelsegment aufweist, das um die Walzenachse 710 mittels Steuerung hin und her schwenkbar in Abhängigkeit von dem Passieren der proximalen Nackenblutreste 22 ist. In Fig. 7A ist die Abdeckung 72 in die Borsten 76 zum Reinigen freigebender Position dargestellt. Außerhalb der Reinigungsphase ist die Abdeckung 72 unter den Fisch 1 geschwenkt. Sie bildet eine Leitfläche, die das Bürstenfenster 621 in dem Leitkörper 62 schließt, der den Fisch 1 aus der Entgrätungseinrichtung 6 übernimmt. Die Bürste 71 ist über einen Arm um eine zur Walzenachse 710 parallele Achse 730 derart schwenkbar gelagert und angeordnet, dass sie zur Unterseite des Fisches 1 hin bzw. davon weg schwenkbar ist, sie also in Richtung B anhebbar und absenkbar ist. Diese Bewegung zum Bürsteneingriff wird in Korrespondenz und Verbindung mit der Bewegung der Abdeckung 72 in Abhängigkeit von dem Auftreten und dem Vorbeigang der zu reinigenden Stellen 2 gesteuert. Zweckmäßig werden pneumatische Steuerungsmittel vorgesehen, die mit üblicher Fischmaschinen-Steuerung verbunden sind.

Die Bürsten-Reinigungseinrichtung 7 weist Niederhalter 74 auf, die um eine zur Bürsten-Walzenachse 710 parallele Achse 740 schwenkbewegbar angeordnet sind. Die Schwenkbewegung wird im Takt der Fischbearbeitungsmaschine 9 derart gesteuert, dass sie das Ausweichen des Fisches 1 nach oben verhindern, wenn die Abdeckung 72 weggeschwenkt und die Bürste 71 hochgeschwenkt wird. Mit Waschdüsen 79 wird die Bürste 71 gereinigt.

Die Vorrichtung gemäß Fig. 1 ist mit einer der Einrichtung 7 räumlich und in zeitlichem Betrieb unmittelbar nachfolgenden Wascheinrichtung 99 ausgestattet. Diese weist eine Mehrzahl Wasserdüsen auf. Die Wasser-Strahlkraft wird nur so groß gemacht, dass im aus Fig. 9 ersichtlichen Arbeitsbereich 992, nämlich im Bereich der bereits von Nackenblutresten befreiten Stellen 2 nur noch eine abschließende Reinigungsspülung mit niedrigem Strahldruck erfolgt.

## Patentansprüche

1. Verfahren zum gesteuerten Bearbeiten von geköpftem und entweidetem Weißfisch (1), insbesondere zum Herstellen von Salzfisch, umfassend folgende Verfahrensschritte:
- vor dem Heraustrennen der im Bauchhöhlenbereich liegenden Hauptgräte (1) mit diese bauchseitig überspannender Fischmembran (13) werden Nackenblutreste (21), die distal an dem geköpften und entweideten Fisch links und rechts seitlich der Hauptgräte (111) außerhalb der Fischmembran (13) in Vertiefungen im Bereich des Kragenknochens (12) freiliegen, mit wenigstens einem auf die Nackenblutreste (21) ausgerichteten Reinigungs-Hochdruckflüssigkeitsstrahl (54) entfernt;
- die Hauptgräte (11) wird im Bereich der Bauchhöhle (14) zusammen mit wenigstens einem Teil dort liegender Blutniere aus dem Fisch (1) herausgeschnitten, um proximale Nackenblutreste (22) am Fischfleisch im Bereich der Bauchhöhle zum Entfernen zugänglich zu machen;
- die proximalen Nackenblutreste (22) werden mit fleischschonendem Reinigungsmittel (71) entfernt;
**dadurch gekennzeichnet, dass** zum fleischschonenden Entfernen die proximalen Nackenblutreste (22) des im Bereich der Bauchhöhle (14) von Hauptgräte (111) und wenigstens einem Teil der Fischmembran (13) befreiten Fisches (1) schichtweise abgetragen werden, wobei ein oberer Anteil durch wenigstens eine auf die proximalen Nackenblutreste (22) ausgerichtete Reinigungs-Hochdruckflüssigkeitsbestrahlung (84) entfernt wird, die derart eingestellt wird, dass offenliegendes Fischfleisch unbeschädigt bleibt und nur ein Restanteil des proximalen Nackenbluts (22) zurückbleibt, der unter der Flüssigkeitsbestrahlung (84) zum Schutz des Fischfleisches beiträgt und anschließend mit wenigstens einem weiteren fleischschonenden Mittel (7) abgetragen wird.

2. Verfahren nach Anspruch 1, **dadurch gekennzeichnet, dass** zunächst ein oberer Anteil der proximalen Nackenblutreste (22) mit einer aufprallreduzierten Reinigungs-Hochdruckflüssigkeitsbestrahlung (84) abgenommen wird und der dabei zurückbleibende Restanteil mit einem fleischschonenden mechanischen Reinigungsmittel (71) abgenommen wird.

3. Verfahren nach Anspruch 2, **dadurch gekennzeichnet, dass** der zurückbleibende Anteil der proximalen Nackenblutreste (22) durch ein gesteuertes Bürstenmittel (71) abgenommen wird.

4. Verfahren nach einem der Ansprüche 1 bis 3, **dadurch gekennzeichnet, dass** die Abtragung der proximalen Nackenblutreste (22) mittels Hochdruckflüssigkeitsbestrahlung (84) so erfolgt, dass der zurückbleibende Anteil, der anschließend entfernt wird, wenigstens etwa 50 % der anfänglich zu beseitigenden proximalen Nackenblutreste (22) beträgt.

5. Verfahren nach einem der Ansprüche 1 bis 4, **dadurch gekennzeichnet, dass** die die proximalen Nackenblutreste (22) erfassende Hochdruckflüssigkeitsbestrahlung (84) aufprallreduziert wird, indem wenigstens ein mit hohem Druck erzeugter Strahl mit breitem Fächer erzeugt wird.

6. Verfahren nach einem der Ansprüche 1 bis 5, **dadurch gekennzeichnet, dass** die Hochdruckbestrahlung (54) der distalen Nackenblutreste (21) und die Hochdruckbestrahlung (84) der proximalen Nackenblutreste (22) mit zumindest im wesentlichen gleichem Quellendruck erzeugt werden, wobei die Aufprallwirkung der Hockdruckbestrahlung (84) der proximalen Nackenblutreste (22) kleiner als die Aufprallwirkung der Hochdruckbestrahlung (54) der distalen Nackenblutreste (22) gemacht wird.

7. Verfahren nach einem der Ansprüche 1 bis 6, **dadurch gekennzeichnet, dass** zur optimalen Fleischgewinnung die Schnitte zum Heraustrennen der Hauptgräte (111) im Bauchhöhlenbereich dicht an der Hauptgräte (111) vorbeigeführt werden, wobei der mittlere Teil der Fischmembran (13)weggeschnitten wird und seitliche Längsränder (131) der Membran (13) zurückbleiben, und dass die Hochdruckflüssigkeitsbestrahlung (84) zum Abtragen des oberen Anteils der proximalen Nackenblutreste (22) zudem so eingestellt wird, dass die Membranränder (131) zum Aufweiten der Bauchseite des Fisches (1) zur Seite gedrückt und durch die Bestrahlung leicht ablösbar gemacht werden, und dass anschließend ein gesteuertes Bürstenmittel (7) die Membranränder (131) entfernt, um den **dadurch** für das Bürstenmittel (7) offen zuliegenkommenden Restanteil der proximalen Nackenblutreste (22) zu entfernen.

8. Verfahren nach einem der Ansprüche 1 bis 7, **dadurch gekennzeichnet, dass** die den oberen Anteil der proximalen Nackenblutreste (22) abtragende Hochdruck-Flüssigkeitsbestrahlung (84) auch die zuvor mit Hochdruck-Flüssigkeitsbestrahlung (54) beaufschlagten Stellen der distalen Nackenblutreste (21) erfasst.

9. Verfahren nach einem der Ansprüche 1 bis 8, **dadurch gekennzeichnet, dass** das den Restanteil der proximalen Nackenblutreste (22) abtragende weitere fleischschonende Reinigungsmittel (7) auch die zuvor mit Hochdruck-Flüssigkeitsbestrahlung (54, 84) beaufschlagten Stellen der distalen Nackenblutreste (21) erfasst.

10. Verfahren nach einem der Ansprüche 1 bis 9, **dadurch gekennzeichnet, dass** der zu bearbeitende Fisch (1) im Schwanzbereich seitlich der Hauptgräte (11) von unten bis über die Hauptgräte (11) aufgeschnitten wird, bevor mittels Hochdruck-Flüssigkeitsbestrahlung (54) außerhalb der geschlossenen Membran (13) freiliegende distale Nackenblutreste (21) entfernt werden.

11. Verfahren nach einem der Ansprüche 1 bis 10, **dadurch gekennzeichnet, dass** der zu bearbeitende Fisch (1) mit seinem Schwanz voraus gefördert wird.

12. Vorrichtung zum Bearbeiten von geköpftem und entweidetem Weißfisch (1), insbesondere zum Durchführen des Verfahrens nach einem der Ansprüche 1 bis 11, umfassend eine eine Förderstrecke bestimmende Fördereinrichtung (3) zum Fördern des zu bearbeitenden Fisches (1) in Mehrzahl, eine an der Förderstrecke angeordnete Entgrätungseinrichtung (6) zum Heraustrennen der Hauptgräte (111) im Bereich der Bauchhöhle (14), eine an der Förderstrecke in Fischlaufrichtung (R) vor der Entgrätungseinrichtung (6) angeordnete Hochdruckflüssigkeitsstrahl-Reinigungseinrichtung (5) zum Entfernen von distalen, außerhalb der Fischmembran (13) freiliegenden Nackenblutresten (21) und eine an der Förderstrecke in Fischlaufrichtung (R) nach der Entgrätungseinrichtung (6) angeordnete Reinigungseinrichtung (708) zum fleischschonenden Entfernen von proximalen Nackenblutresten (22) nach dem Herausschneiden der Hauptgräte (111) im Bereich der Bauchhöhle (14), **dadurch gekennzeichnet, dass** die nach der Entgrätungseinrichtung (6) angeordnete Reinigungseinrichtung (708) durch eine Einrichtung zum schichtweisen Abtragen der proximalen Nackenblutreste (22) derart ausgebildet ist, dass sie eine Hochdruckflüssigkeitsstrahl-Einrichtung (8) zum einen Restanteil belassenden fleischschonenden Abtragen der proximalen Nackenblutreste (22) sowie eine in Fischlaufrichtung (R) nachgeordnete Reinigungseinrichtung (7) zum fleischschonenden Abtragen des nach Hochdruckflüssigkeitsbestrahlung (84) zurückbleibenden Restanteils aufweist.

13. Vorrichtung nach Anspruch 12, **dadurch gekennzeichnet, dass** die Hochdruckflüssigkeitsstrahl-Einrichtung (8) zum Abtragen der proximalen Nackenblutreste (22) wenigstens ein Paar jeweils einen Hochdruckflüssigkeitsstrahl (84) hervorbringender Düsen (81) aufweist.

14. Vorrichtung nach Anspruch 13, **dadurch gekennzeichnet, dass** die Düsen (81) unterhalb von Durchgangsöffnungen (83) einer den Fisch (1) bauchseitig führenden Überleitungseinrichtung (62) angeordnet sind, die den Fisch (1) in die am Fischlaufweg nachfolgende Reinigungseinrichtung (7) überführt, die auf das Abtragen des nach Hochdruckflüssigkeitsbestrahlung (84) zurückbleibenden Restanteils der proximalen Nackenblutreste (22) angepasst ist.

15. Vorrichtung nach Anspruch 13 oder 14, **dadurch gekennzeichnet, dass** die Düsen (81) der Hochdruckflüssigkeitsstrahl-Einrichtung (8) zum Abtragen des oberen Anteils der proximalen Nackenblutreste (22) eine auf die passierenden proximalen Nackenblutreste (22) ausgerichtete aufgefächerte Bestrahlung (84) erzeugen.

16. Vorrichtung nach Anspruch 15, **dadurch gekennzeichnet, dass** die Fächerdüsen (81) auch zum Unterspülen von Membranresten (131) ausgebildet und ausgerichtet sind.

17. Vorrichtung nach einem der Ansprüche 13 bis 16, **dadurch gekennzeichnet, dass** die Düsen (51) der Hochdruckflüssigkeitsstrahl-Einrichtung (5) zum Enfemen der distalen Nackenblutreste (21) eine mit steilem Winkel auf die distalen Nackenblutreste (21) ausgerichtete konzentrierte Bestrahlung (54) erzeugen.

18. Vorrichtung nach einem der Ansprüche 12 bis 17, **dadurch gekennzeichnet, dass** die Hochdruckflüssigkeitsstrahl-Einrichtung (8) zum Entfernen des oberen Anteils der proximalen Nackenblutreste (22) einen Strahlbereich aufweist, der beim Passieren des Fisches (1) die proximalen Nackenblutreste (22) sowie die Stellen der distalen Nackenblutreste (21) erfasst.

19. Vorrichtung nach einem der Ansprüche 12 bis 18, **dadurch gekennzeichnet, dass** die Reinigungseinrichtung (7) zum Abtragen des Restanteils der proximalen Nackenblutreste (22) Abnehmerelemente (76) umfasst, die beim Passieren des Fisches (1) die Stellen der proximalen Nackenblutreste (22) sowie die Stellen der distalen Nackenblutreste (21) erfasst.

20. Vorrichtung nach einem der Ansprüche 12 bis 19, **dadurch gekennzeichnet, dass** längs der Förderstrecke in Fischlaufrichtung (R) vor der zum Entfernen von distalen Nackenblutresten (21) vorgesehenen Reinigungseinrichtung (5) eine Einrichtung (4) zum seitlich seiner Hauptgräte (11) erfolgenden Aufschneiden des Schwanzbereichs des Fisches (1) angeordnet ist, wobei der Schneideinrichtung (4) eine Messeinrichtung mit zugeordnetem Förderweg zum Erfassen von Fischlängendaten vorgeordnet ist, die zur programmierten Verknüpfung mit Fischartdaten für die Betriebssteuerung der Nackenblutreste (21, 22) entfernenden Reinigungseinrichtungen (5, 7, 8) bestimmt sind.

21. Vorrichtung nach einem der Ansprüche 13 bis 20, **dadurch gekennzeichnet, dass** sie eine Flüssigkeits-Druckquelle (95) umfasst, die Düsen (51) der Hochdruckflüssigkeitsbestrahlung (54) zum Entfernen von distalen Nackenblutresten (21) und die Düsen (81) der Hochdruckflüssigkeitsbestrahlung (84) zum Entfernen von proximalen Nackenblutresten (22) Druckflüssigkeit mit zumindest im wesentlichen gleichem Druck zuführt.

## Claims

1. Method for the controlled treatment of headless and gutted whitefish (1), in particular for producing saltfish, including the following steps:
- before separating out the backbone (1) which lies in the ventral cavity region with the fish membrane (13) spanning the bone on the ventral side, nape blood remains (21) which are exposed distally on the headless and gutted fish to the left and right laterally of the backbone (111) outside the fish membrane (13) in recesses in the region of the clavicle (12) are removed with at least one high-pressure liquid cleaning jet (54) directed onto the nape blood remains (21);
- the backbone (11) is cut out of the fish (1) in the region of the ventral cavity (14) together with at least part of the blood kidney located there, in order to make proximal nape blood remains (22) on the fish flesh in the region of the ventral cavity accessible for removal;
- the proximal nape blood remains (22) are removed with a cleaning means (71) which treats the flesh carefully;
**characterised in that**, for careful removal to save the flesh, the proximal nape blood remains (22) of the fish (1), from which in the region of the ventral cavity (14) the backbone (111) and at least part of the fish membrane (13) have been removed, are removed in layers, wherein an upper fraction is removed by at least one high-pressure cleaning liquid jet (84) directed onto the proximal nape blood remains (22) and set such that exposed fish flesh remains undamaged and only a residual fraction of the proximal nape blood (22) is left behind, which contributes to protection of the fish flesh under liquid jetting (84), and is then removed with at least one further means (7) which is careful with the flesh.

2. Method according to claim 1, **characterised in that** first an upper fraction of the proximal nape blood remains (22) is removed with high-pressure cleaning liquid jetting (84) with reduced impingement, and the residual fraction left behind in the process is removed with a mechanical cleaning means (71) which is careful with the flesh.

3. Method according to claim 2, **characterised in that** the fraction of the proximal nape blood remains (22) left behind is removed by a controlled brush means (71).

4. Method according to any of claims 1 to 3, **characterised in that** removal of the proximal nape blood remains (22) takes place by high-pressure liquid jetting (84) in such a way that the fraction left behind, which is removed subsequently, is at least approximately 50% of the proximal nape blood remains (22) to be removed initially.

5. Method according to any of claims 1 to 4, **characterised in that** the high-pressure liquid jetting (84) which covers the proximal nape blood remains (22) is reduced in impingement by producing at least one jet in a broad fan which is produced at high pressure.

6. Method according to any of claims 1 to 5, **characterised in that** high-pressure jetting (54) of the distal nape blood remains (21) and high-pressure jetting (84) of the proximal nape blood remains (22) are produced with at least substantially the same source pressure, the impingement effect of high-pressure jetting (84) of the proximal nape blood remains (22) being smaller than the impingement effect of high-pressure jetting (54) of the distal nape blood remains (22) .

7. Method according to any of claims 1 to 6, **characterised in that**, for optimum flesh recovery, the cuts for cutting out the backbone (111) in the ventral cavity region pass close by the backbone (111), the central portion of the fish membrane (13) being cut away, and lateral longitudinal edges (131) of the membrane (13) being left behind, and **in that** high-pressure liquid jetting (84) is also adjusted for removing the upper fraction of the proximal nape blood remains (22) in such a way that the membrane edges (131) are pushed aside to widen the ventral side of the fish (1) and made easy to detach by the jetting, and that then a controlled brush means (7) removes the membrane edges (131) in order to remove the residual fraction of the proximal nape blood remains (22) which are thus exposed for the brush means (7).

8. Method according to any of claims 1 to 7, **characterised in that** the high-pressure liquid jetting (84) which removes the upper fraction of the proximal nape blood remains (22) also covers the areas of the distal nape blood remains (21) which have been previously subjected to high-pressure liquid jetting (54) .

9. Method according to any of claims 1 to 8, **characterised in that** the further cleaning means (7) which is careful with the flesh and which removes the residual fraction of the proximal nape blood remains (22) also covers the areas of the distal nape blood remains (21) which have been previously subjected to high-pressure liquid jetting (54, 84).

10. Method according to any of claims 1 to 9, **characterised in that** the fish (1) to be treated is cut open in the tail region laterally of the backbone (11) from below to beyond the backbone (11), before distal nape blood remains (21) exposed outside the closed membrane (13) are removed by high-pressure liquid jetting (54).

11. Method according to any of claims 1 to 10, **characterised in that** the fish (1) to be treated is conveyed tail first.

12. Apparatus for treating headless and gutted whitefish (1), in particular for carrying out the method according to any of claims 1 to 11, including a conveying device (3) which defines a conveying zone for conveying the fish (1) to be treated in numbers, a bone removal device (6) arranged on the conveying zone for cutting out the backbone (11) in the region of the ventral cavity (14), a high-pressure liquid jet cleaning device (5) arranged on the conveying zone in front of the bone removal device (6) in the direction of fish travel (R) for the removal of distal nape blood remains (21) exposed outside the fish membrane (13), and a cleaning device (708) arranged on the conveying zone behind the bone removal device (6) in the direction of fish travel (R) for the removal of proximal nape blood remains (22) in a manner which is careful with the flesh after cutting out the backbone (111) in the region of the ventral cavity (14), **characterised in that** the cleaning device (708) arranged behind the bone removal device (6) is formed by a device for removing the proximal nape blood remains (22) in layers in such a way that it comprises a high-pressure liquid jet device (8) for removing the proximal nape blood remains (22) so as to leave a residual fraction and be careful with the flesh, and a cleaning device (7) mounted behind in the direction of fish travel (R) for removing the residual fraction left behind after high-pressure liquid jetting (84) in a manner which is careful with the flesh.

13. Apparatus according to claim 12, **characterised in that** the high-pressure liquid jet device (8) for removing the proximal nape blood remains (22) has at least one pair of nozzles (81) each causing a high-pressure liquid jet (84).

14. Apparatus according to claim 13, **characterised in that** the nozzles (81) are arranged below through-holes (83) in a lead-over device (62) which guides the fish (1) on the ventral side and which transfers the fish (1) to the cleaning device (7) which follows on the path of fish travel and which is adapted for removal of the residual fraction of the proximal nape blood remains (22) left behind after high-pressure liquid jetting (84).

15. Apparatus according to claim 13 or 14, **characterised in that** the nozzles (81) of the high-pressure liquid jet device (8) for removing the upper fraction of the proximal nape blood remains (22) produce a fanned-out jet directed onto the passing proximal nape blood remains (22).

16. Apparatus according to claim 15, **characterised in that** the fan nozzles (81) are also designed and oriented to flush under membrane remains (131).

17. Apparatus according to any of claims 13 to 16, **characterised in that** the nozzles (51) of the high-pressure liquid jet device (5) for removing the distal nape blood remains (21) produce a focused jet (54) directed at a steep angle onto the distal nape blood remains (21).

18. Apparatus according to any of claims 12 to 17, **characterised in that** the high-pressure liquid jet device (8) for removing the upper fraction of the proximal nape blood remains (22) has a jet region which, when the fish (1) passes, covers the proximal nape blood remains (22) as well as the areas of the distal nape blood remains (21).

19. Apparatus according to any of claims 12 to 18, **characterised in that** the cleaning device (7) for removing the residual fraction of the proximal nape blood remains (22) includes remover elements (76) which, when the fish (1) passes, covers the areas of the proximal nape blood remains (22) as well as the areas of the distal nape blood remains (21).

20. Apparatus according to any of claims 12 to 19, **characterised in that** along the conveying zone in the direction of fish travel (R) in front of the cleaning device (5) provided for removing distal nape blood remains (21) is arranged a device (4) for cutting open the tail region of the fish (1) laterally of its backbone (11), wherein in front of the cutting device (4) is arranged a measuring device with associated conveying path for detecting fish length data which are intended for programmed linking to fish species data for operational control of the cleaning devices (5, 7, 8) which remove nape blood remains (21, 22).

21. Apparatus according to any of claims 13 to 20, **characterised in that** it includes a liquid pressure source (95) which delivers pressurised liquid having at least substantially the same pressure to nozzles (51) of the high-pressure liquid jetting system (54) for removing distal nape blood remains (21) and to nozzles (81) of the high-pressure liquid jetting system (84) for removing distal nape blood remains (22).

## Revendications

1. Procédé de traitement commandé de poisson frais (1) dont on a retiré la tête et les arêtes, en vue notamment de fabriquer du poisson saumuré, ledit procédé comportant les étapes opératoires suivantes :
- avant de retirer l'arête principale (1) au niveau de la cavité abdominale, du sang cervical résiduel (21), qui est libéré à l'extérieur de la membrane de poisson (13) dans des cavités dans la région de l'os cervical (12) du côté distal du poisson sans tête ni arêtes latéralement à gauche et à droite de l'arête principal (111), est retiré avec la membrane (13) recouvrant l'arête principale du côté de l'abdomen à l'aide d'au moins un jet de liquide de nettoyage à haute pression (54) orienté vers le sang cervical résiduel (21),
- l'arête principale (11) est découpée et retirée du poisson (1) dans la région de la cavité abdominale (14) conjointement avec au moins une partie des reins se trouvant à cet endroit afin de pouvoir accéder, pour le retirer, au sang cervical résiduel (22) du côté proximal de la chair de poisson dans la région de la cavité abdominale,
- le sang cervical résiduel (22) du côté proximal est retiré avec un moyen de nettoyage (71) ménageant la chair ;
**caractérisé en ce que** le sang cervical résiduel proximal (22) du poisson (1), dépourvu de l'arête principale (111) dans la région de la cavité abdominale (14) et d'au moins une partie de la membrane (13), est retiré par couche afin de ménager la chair, une portion supérieure étant retirée à l'aide d'au moins un jet de liquide de nettoyage à haute pression (84) qui est orienté vers le sang cervical résiduel proximal (22) et qui est réglé de façon à ne pas endommager la chair mise à nu et à ne laisser qu'une portion résiduelle du sang cervical proximal (22) qui contribue à protéger la chair du poisson sous le jet de liquide (84) puis qui est retirée à l'aide d'au moins un autre moyen (7) ménageant la chair.

2. Procédé selon la revendication 1, **caractérisé en ce qu'**une portion supérieure du sang cervical résiduel proximal (22) est tout d'abord retirée à l'aide d'un jet de liquide de nettoyage à haute pression et à impact réduit (84) et la portion résiduelle restante est retirée à l'aide d'un moyen de nettoyage mécanique (71) ménageant la chair.

3. Procédé selon la revendication 2, **caractérisé en ce que** la portion restante du sang cervical résiduel proximal (22) est retirée à l'aide d'un moyen à brosses commandé (71).

4. Procédé selon l'une des revendications 1 à 3, **caractérisé en ce que** le retrait du sang cervical résiduel proximal (22) est effectué à l'aide d'un jet de liquide à haute pression (84) de sorte que la portion restante, qui est ensuite retirée, est égale à au moins 50% environ du sang cervical résiduel proximal (22) qui a été initialement retiré.

5. Procédé selon l'une des revendications 1 à 4, **caractérisé en ce que** l'impact du jet de liquide à haute pression (84), qui enlève le sang cervical résiduel proximal (22), est réduit en générant au moins un jet à haute pression ayant la forme d'un large éventail.

6. Procédé selon l'une des revendications 1 à 5, **caractérisé en ce que** le jet à haute pression (54) destiné au sang cervical résiduel distal (21) et le jet à haute pression (84) destiné au sang cervical résiduel proximal (22) sont générés avec au moins sensiblement la même pression de base, l'impact du jet à haute pression (84) destiné au sang cervical résiduel proximal (22) étant inférieur à l'impact du jet à haute pression (54) destiné au sang cervical résiduel distal (22).

7. Procédé selon l'une des revendications 1 à 6, **caractérisé en ce que** les découpes permettant de séparer et retirer l'arête principale (111) dans la région de la cavité abdominale sont effectuées tout près de l'arête principale (111) afin d'obtenir le maximum de chair, la partie médiane de la membrane de poisson (13) étant découpée en laissant des bords longitudinaux latéraux (131) de la membrane (13), **en ce que** le jet de liquide à haute pression (84) destiné à retirer la portion supérieure du sang cervical résiduel proximal (22) est en outre réglée de façon à repousser sur le côté les bords de membrane (131) afin de dégager le côté ventral du poisson (1) et de façon à pouvoir les retirer aisément à l'aide du jet, et **en ce qu'**un moyen à brosses commandé (7) retire ensuite les bords de membrane (131) afin de retirer la portion résiduelle du sang cervical résiduel proximal (22), laquelle est accessible au moyen à brosses (7).

8. Procédé selon l'une des revendications 1 à 7, **caractérisé en ce que** le jet de liquide à haute pression (84), éliminant la portion supérieure du sang cervical résiduel proximal (22), enlève également le sang cervical résiduel distal (21) à des endroits déjà sollicités par le jet de liquide à haute pression (54).

9. Procédé selon l'une des revendications 1 à 8, **caractérisé en ce que** l'autre moyen de nettoyage (7) ménageant la chair et éliminant la portion résiduelle du sang cervical résiduel proximal (22) enlève également le sang cervical résiduel distal (21) à des endroits déjà sollicités par le jet de liquide à haute pression (54, 84).

10. Procédé selon l'une des revendications 1 à 9, **caractérisé en ce que** le poisson à traiter (1) est découpée au niveau de la queue, latéralement à l'arête principale (11), depuis le bas jusqu'au dessus de l'arête principale (11) avant de retirer le sang cervical résiduel distal (21), se trouvant à l'extérieur de la membrane fermée (13), à l'aide d'un jet de liquide à haute pression (54).

11. Procédé selon l'une des revendications 1 à 10, **caractérisé en ce que** le poisson à traiter (1) avance avec sa queue placée en avant.

12. Dispositif de traitement de poisson frais (1) dont on a retiré la tête et les arêtes, destiné notamment à mettre en oeuvre le procédé selon l'une des revendications 1 à 11, ledit dispositif de traitement comportant un dispositif d'acheminement (3) définissant une voie d'acheminement et destiné à acheminer en grande partie le poisson à traiter (1), un dispositif de retrait d'arête (6) placé sur la voie d'acheminement et destiné à retirer l'arête principale (111) dans la région de la cavité abdominale (14), un dispositif de nettoyage à de liquide à haute pression (5) placé sur la voie d'acheminement en avant du dispositif de retrait d'arête (6) par référence au sens (R) d'acheminement du poisson et destiné à retirer le sang cervical résiduel distal (21) se trouvant à l'extérieur de la membrane de poisson (13), et un dispositif de nettoyage (708) placé sur la voie d'acheminement en aval du dispositif de retrait d'arête (6) par référence au sens (R) d'acheminement du poisson et destiné à retirer le sang cervical résiduel proximal (22) tout en ménageant la chair après avoir retiré l'arête principale (111) dans la région de la cavité abdominale (14), **caractérisé en ce que** le dispositif de nettoyage (708), placé en aval du dispositif de retrait d'arête (6), est conformé en dispositif de retrait par couche du sang cervical résiduel proximal (22), et **en ce qu'**il comporte un dispositif à jet de liquide à haute pression (8) destiné à retirer le sang cervical résiduel proximal (22) tout en laissant une portion résiduelle et en ménageant la chair ainsi qu'un dispositif de nettoyage (7) placé en aval par référence au sens (R) d'acheminement du poisson et destiné à retirer la portion résiduelle, laissée par le jet de liquide à haute pression (84), tout en ménageant la chair.

13. Dispositif selon la revendication 12, **caractérisé en ce que** le dispositif à jet de liquide à haute pression (8) destiné à éliminer le sang cervical résiduel proximal (22) comporte une paire de buses (81) générant chacune un jet de liquide à haute pression (84).

14. Dispositif selon la revendication 13, **caractérisé en ce que** les buses (81) sont disposées au-dessous d'ouvertures de passage (83) d'un dispositif de transfert (62) guidant le poisson (1) sur le ventre et transférant le poisson (1) dans le dispositif de nettoyage (7) qui est placé en aval sur la voie d'acheminement de poisson et qui est adapté au retrait de la portion résiduelle du sang cervical résiduel proximal (22) qui a été laissée par le jet de liquide à haute pression (84).

15. Dispositif selon la revendication 13 ou 14, **caractérisé en ce que** les buses (81) du dispositif à jet de liquide à haute pression (8), destiné à éliminer la portion supérieure du sang cervical résiduel proximal (22), génèrent un jet (84) qui est évasé en éventail et qui est orienté vers le sang cervical résiduel proximal (22) qui passe.

16. Dispositif selon la revendication 15, **caractérisé en ce que** les buses en éventail (81) sont également conformées et orientées de façon à laver les restes de membrane (131) par au-dessous.

17. Dispositif selon l'une des revendications 13 à 16, **caractérisé en ce que** les buses (51) du dispositif à jet de liquide à haute pression (5), destiné à éliminer le sang cervical résiduel distal (21), génèrent un jet concentré (54) qui est orienté avec un angle obtus vers le sang cervical résiduel distal (21).

18. Dispositif selon l'une des revendications 12 à 17, **caractérisé en ce que** le dispositif à jet de liquide à haute pression (8), destiné à éliminer la portion supérieure du sang cervical résiduel proximal (22), comporte une région de jet qui, lors du passage du poisson (1), enlève le sang cervical résiduel proximal (22) ainsi que le sang cervical résiduel distal (21) qui reste par endroits.

19. Dispositif selon l'une des revendications 12 à 18, **caractérisé en ce que** le dispositif de nettoyage (7), destiné à éliminer la portion résiduelle du sang cervical résiduel proximal (22), comporte des éléments de retrait (76) qui, lors du passage du poisson (1), enlèvent le sang cervical résiduel proximal (22) ainsi que le sang cervical résiduel distal (21) qui restent par endroits.

20. Dispositif selon l'une des revendications 12 à 19, **caractérisé en ce qu'**un dispositif (4), destiné à découper la région de queue du poisson (1) latéralement à son arête principale (11), est placé le long de la voie d'acheminement en amont du dispositif de nettoyage (5), destiné à éliminer le sang cervical résiduel distal (21), par référence au sens (R) d'acheminement du poisson, un dispositif de mesure associé à une voie d'acheminement étant placé en amont du dispositif de coupe (4) et étant destiné à détecter des données relatives à la longueur du poisson, lesquelles sont destinées à être combinées de façon programmée à des données relatives au type de poisson afin de commander le fonctionnement des dispositifs de nettoyage (5, 7, 8) qui éliminent le sang cervical résiduel (21, 22).

21. Dispositif selon l'une des revendications 13 à 20, **caractérisé en ce qu'**il comporte une source de liquide sous pression (95) qui amène du liquide sous pression, avec au moins sensiblement la même pression, à des buses (51) du jet de liquide à haute pression (54) destiné à éliminer le sang cervical résiduel distal (21) et à des buses (81) du jet de liquide à haute pression (84) destiné à éliminer le sang cervical résiduel proximal (22).
